Europäisches Patentamt

European Patent Office

Office européen des brevets

(19)

(11) **EP 1 416 359 A1**

(12) **EUROPEAN PATENT APPLICATION**

(43) Date of publication:
06.05.2004 Bulletin 2004/19

(51) Int Cl.⁷: **G06F 3/00**

(21) Application number: 02024276.4

(22) Date of filing: 31.10.2002

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(71) Applicant: **Sony International (Europe) GmbH
10785 Berlin (DE)**

(72) Inventors:
• **Michelitsch, Georg,
Advanced Tech. Ct. Stuttgart
70327 Stuttgart (DE)**

• **Williams, Jason,
Advanced Tech. Center Stuttgart
70327 Stuttgart (DE)**

(74) Representative: **Müller - Hoffmann & Partner
Patentanwälte,
Innere Wiener Strasse 17
81667 München (DE)**

(54) **Method for operating a haptic interface unit**

(57)    A method for operating a haptic interface unit (1) is provided wherein interaction feedback force data (IFFD) are generated to be representative for an interaction feedback force (IFF) which increases with a decreasing velocity (v) of at least one haptic device (20) and which decreases as the velocity (v) increases.

Fig. 1

EP 1 416 359 A1

Printed by Jouve, 75001 PARIS (FR)

## Description

The present invention relates to a method for operating a haptic interface unit according to the preamble of claim 1, to a respective haptic interface unit, a computer program product, and a computer readable storage medium.

Nowadays, haptic interface techniques and haptic interface units become more and more popular for increasing the convenience for a user when using and operating electronic equipment and appliances. For instance, in the case of graphical user interfaces (GUI) haptic interface techniques may support the process of operating and selecting different menus. However, present haptic interface units do not take into account the typical behavior of the different users, in particular within a selection process. Therefore, there is still a further adaptation necessary to make interface techniques based on haptic interactions more convenient for the user.

It is therefore an object of the present invention to provide a method for operating a haptic interface unit, which enables a particular simple and reliable operation process with respect to a haptic interface unit.

The object is achieved by a method for operating a haptic interface unit according to the generic part of claim 1 with the characterizing features of claim 1. Additionally, the object is achieved by a haptic interface unit according to the characterizing features of claim 13, a computer program product according to the characterizing features of claim 14, and a computer readable storage medium according to the characterizing features of claim 15.

In known methods for operating haptic interface units at least velocity information data with respect to at least one haptic device are generated and/or received. Based on and in dependence of at least said velocity information data interaction feedback force data are generated and/or provided which are descriptive or representative for an interaction feedback force to be generated and/or exerted by said at least one haptic device. Additionally, said interaction feedback force data may be transmitted to said at least one haptic device so as to generate and/or exert said interaction feedback force.

The inventive method for operating a haptic interface unit is characterized in that an inverted damping operation mode is provided. In said inverted damping operation mode said interaction feedback force data are at least partly generated to be representative for an interaction feedback force which increases with velocity information data being representative for a decreasing velocity, so as to generate and/or exert an interaction feedback force, which increases with a decreasing velocity. Additionally or alternatively, said interaction feedback force data are at least partly generated to be representative for an interaction feedback force which decreases with velocity information data being representative for an increasing velocity, so as to generate and/or exert an interaction feedback force which decreases with an increasing velocity. In each case, said velocity is a velocity with respect to a respective haptic device or a pointing unit thereof.

It is therefore a basic idea of the present invention to generate an interaction feedback force which increases with decreasing velocity and which decreases with increasing velocity with respect to a haptic device or a pointing unit thereof. This concept is referred to as reduced damping or inverted damping which is counter-intuitive with respect to usual handling of pointing devices, in particular haptic devices or the like.

According to a preferred embodiment of the inventive method, the inverted damping operation mode may be performed with respect to each vectorial components of said interaction feedback force and/or with respect to said velocity, in particular in an independent manner. Consequently, the different spatial directions may be evaluated independently from each other, thereby giving a more realistic feeling for the user when operating a haptic interface unit and when using a respective electronic device or equipment.

With respect to the respective velocity said interaction feedback force data may be generated so as to build up an interaction feedback force which supports and may increase a velocity or which may counteract against said velocity. It is of particular advantage when said interaction feedback force data are generated to describe said interaction feedback force as a damping force, so as to generate and/or exert an interaction feedback force acting against a given velocity or a vectorial component thereof, in particular in the sense of a counterforce or of a frictional force.

Additionally or alternatively, the interaction feedback force data are generated to describe said interaction feedback force or a vectorial component thereof as having an absolute value f being - at least piecewise - a positive monotonically decreasing function g of the respective velocity v or of a vectorial component thereof, in particular fulfilling the relation

$$f(v) \propto g(v) \,.$$

A large variety of at least piecewise positive and monotonically decreasing functions g may be chosen.

For instance, said at least piecewise positive and monotonically decreasing function g may be chosen to fulfill at least the relation

$$g(v) = \frac{1}{h(v)},$$

where h is an at least piecewise positive and monotonically increasing function of the velocity v or of a vectorial component thereof.

Alternatively or additionally, said at least piecewise positive and monotonically decreasing function g may be chosen to fulfill at least piecewise the relation

$$g(v) = \frac{1}{|v|},$$

where v denotes a velocity or a vectorial component thereof.

Further alternatives are given by choosing the at least piecewise positive and monotonically decreasing function g as a step function, a staircase function, a linear function or the like.

According to a further alternative of the inventive method for operating a haptic interface unit said interaction feedback force data are generated to describe said interaction feedback force as a force which is at least piecewise dependent on a position or a position vector. Therefore, the interaction feedback force may be modulated by an underlying spatial structure.

Here, said position or position vector may be chosen to describe or may be assigned to a position of a respective haptic device or of an element thereof, in particular of a pointing unit or device thereof.

Alternatively or additionally, said position or position vector may be chosen to describe or may be assigned to a position of a corresponding abstract pointing means within a data structure, in particular of a graphical user interface or the like.

As a further alternative or addition a holding force mode may be provided, in which the absolute value f the interaction feedback force or of a vectorial component thereof is increased to a predetermined value $f_{hold}$ or above a predetermined force level $f_{max}$, if the respective velocity or a vectorial component thereof decreases below a given threshold value $v_{min}$, in particular in position dependent form. According to this measure a so-called fingerhold mode may be realized.

Further alternatively or additionally, the absolute value f of the interaction feedback force of a vectorial component thereof may be decreased to a predetermined value $f_{min}$, in particular of zero, or below a predetermined force level $f_{min}$, if the respective velocity v or a vectorial component thereof increases above a given threshold value $v_{max}$.

It is a further aspect of the present invention to provide a haptic interface unit which is capable of performing or realizing the inventive method for operating a haptic interface unit and/or steps thereof.

Further additionally, the present invention provides a computer program product, comprising computer program means adapted to perform and/or realize the inventive method for operating a haptic interface unit and/or the steps thereof, when it is executed on a computer, a digital signal processing means and/or the like.

Finally, the present invention provides a computer readable storage medium comprising the inventive computer program product.

These and further aspects of the present invention will be more elucidated taking into account the following remarks:

A basic idea of the present invention is to provide a haptic interaction technique that relies on the counter-intuitive notion of reducing damping forces as the user's finger/hand motions speed up, and increasing those forces as the speed is reduced.

Motivation

In a large range of tasks involving man-machine interactions, a user would have to select an item from a list of items presented by the system, such as a query result from a database, or the selection of names from an address list. In these cases the items are usually partially ordered according to one sorting criteria such as the alphabetical order of names. However, the order of the items does not allow the user to move straight to the item he is looking for, because the distribution of items in the list is not known a priori. As a result, the user has to rely on the visual feedback provided by the system displaying the items on the list. The coordination between interpreting the visual feedback given by the system and the users haptic input for navigating within the list constitute a closed-loop system.

In another example - the selection of parameter values for an audio studio mixer - the distribution of values is known by the user beforehand, but the overall impact of the chosen values on the resulting sound has to be judged by the user case by case. Again, the resulting interaction paradigm can be viewed as a closed-loop system (between haptic input and audio feedback).

The motivation behind the techniques described in this invention report is to help the user perform the selection task by adding haptic feedback to the input devices used for navigation in large lists of items.

Concepts

Based on observing subjects during usability tests who performed a selection task using a position based control mechanism for choosing values out of a known value range, the author of this report discovered that the speed of finger movement during the task was a reliable indication of the user's intention regarding the selection task. The slower the movement the closer the user was to the chosen target in the list. As a result the following three basic interaction techniques have been combined to form an efficient and enjoyable way of navigating in data sets:

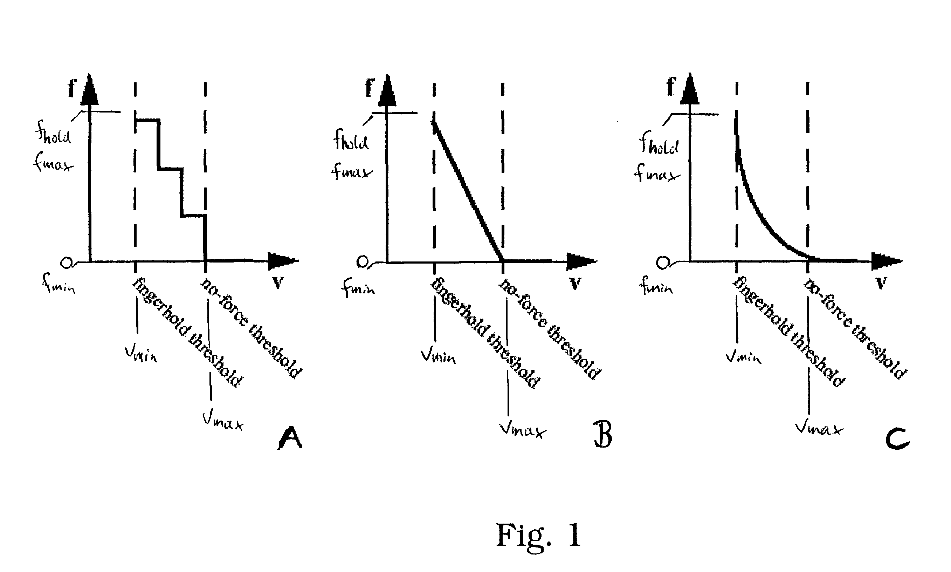

1. Inverted damping mode: A reaction force is applied to the input device that is directed opposite to the direction of the user's finger/hand movement. The strength of the force is inverse proportional to the speed of the user's finger/hand movement. That means, the faster the user moves his hand the lower the resisting force will become until it disappears all together (see figure 1 for various functions to implement such an effect). In comparison, a well known effect from the real world, viscosity, can be described by a reaction force that opposes the users finger/hand movement, but where the strength of the force is proportional to the speed of the users movement. Examples for the inverted damping mode are shown in middle sections of figures 1A to 1C, as described below in more detail.

2. Finger hold mode: As the user's finger/hand movement slows down and goes below a certain threshold, the speed based damping forces will be replaced by a force that holds the users finger/hand in place. The underlying model for this mode is a spring damper model. The user can break out of this mode by applying a force to the input device that is larger then a preset force threshold set by the system. By doing so the system will transition into the third mode, described below.

3. Force well mode: As long as the speed of the users finger/hand movement stays below a preset threshold, the system will apply forces to the input device that oppose the users finger/hand movement, but where the force is modulated by the values of the underlying data set.

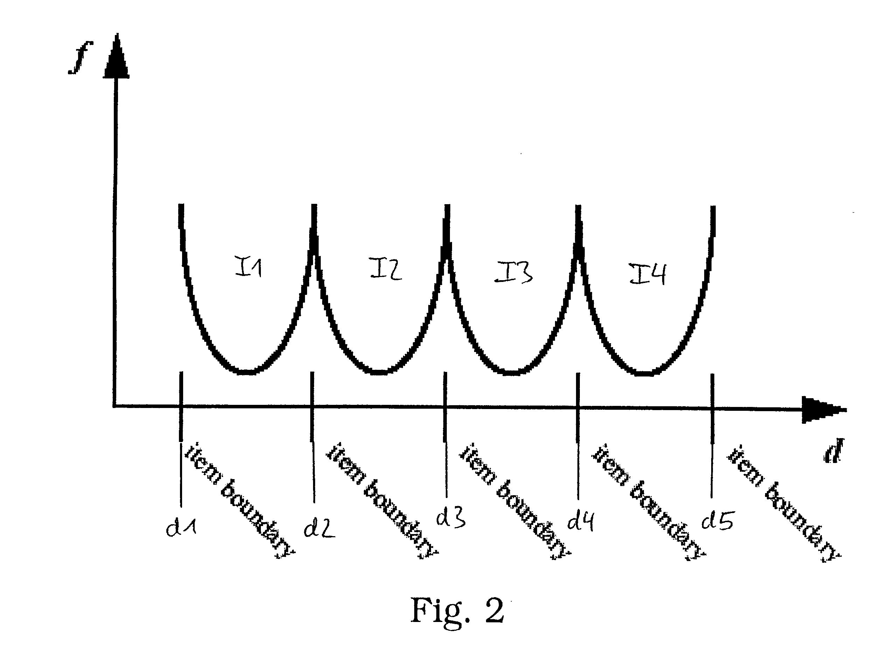

For example, if the data set to be manipulated consists of items in a list, then the user will feel an increased force whenever he crosses the boundary between one item in the list and the neighboring one. In other words, the force wells can be considered finger holds for each item in the list, as is shown in figure 2. As the speed of the users finger/hand movement increases beyond a given threshold, the system switches back to the inverted damping mode.

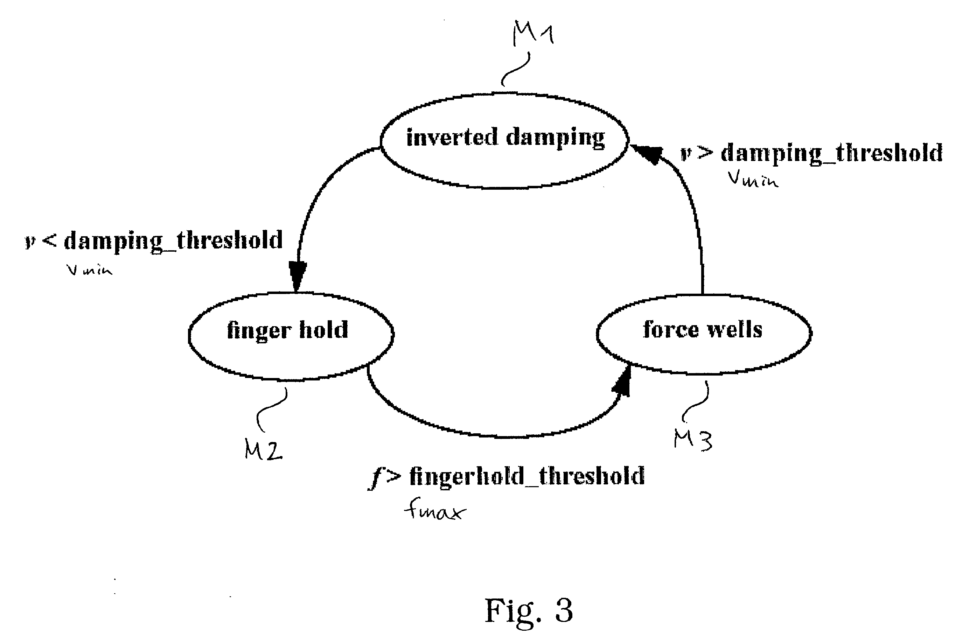

Figure 3 below shows the transitions between the three modes as the user interacts with the data set. Please note that the decision for a state transition is either based on the velocity v of the user's finger/hand movement, or the reaction force f imposed on the user's hand by the spring damper model deployed in the finger hold mode.

An alternative method can be considered as well. Instead of moving from "inverted damping" to "finger hold" one can implement the alternative of transition from "inverted damping" to "force well" mode and then to "finger hold" mode.

Implementation

First, an implementation suited for desktop system is described that uses a general-purpose robotic arm - referred to as the PHANToM - for simulating force-feedback input devices. Second, a possible design for an input device based on magnetorheological fluids is discussed. The descriptions focus on devices where the input values are set by lateral movement of the users hand. An equivalent method using rotational movement is covered as well in less detail.

An implementation may create a virtual input device that exhibits the behavior of the above mentioned haptic interaction techniques. The PHANToM is constrained to movements within a narrow bounding box that allows for only one degree of freedom for the movement of the robot arm. The full range of movement is defined by the end points of the bounding box. By extending one of the classes of the respective framework, the inverted damping effect is implemented as follows.

We override on method of that class, which is called each time the forces for the PHANToM are to be updated. We retrieve the current speed of the PHANToM and calculate the new force by multiplying the current speed by a negative constant that we chose from a lookup table. Alternatively, a linear or non-linear function that relates the speed to the resulting force in the above mentioned fashion can be applied, compare with figure 1. The finger hold mechanism is implemented through the use of a special constraint class provided by the respective framework. Again, through monitoring the actual PHANToM reaction force level, we decide on stopping the finger hold effect and switch to the force well mode. The force well mode can either be implemented through the use of the "Slider" class of the respective framework, or through the modulation of the inverted damping force. As the speed of the user's finger/hand movement exceeds a preset threshold, the inverted damping mode is set again as explained above. In case of using a rotational motion for selecting values from a range with inverted damping engaged, different classes from the respective framework can be used - either a dial class or a manipulator class.

It should be noted, however, that this example is just one possible way of the present embodiment. Using motors as in the PHANToM is also feasable and sometimes preferable, such as in studiomixers, where these motors are already built in.

A traditional push button or a rotary dial would be augmented with a damping unit containing a magneto rheological fluid. By applying a magnetic field to the damping unit, the suspended iron particles in the fluid are aligned and as a result the viscosity of the fluid changes. The speed of movement can be measured by an accelerometer attached to the push button or rotary dial. With both the accelerometer and the magnetic field under computer control, the above mentioned algorithm can be implemented either on a micro controller or as an application on the host computer. As potential applications among the applications that could benefit from this invention the following seem to be of particular importance:

1. Studio audio mixer: Quick and accurate adjustment of parameters with sliders.

2. Tuning of radio stations: Efficient search with rotary dials (including content based feedback such as those based on reception quality as well as those based on user's bookmarks).

3. Phone systems with address book: Efficient access of entries in phone book via rotary dial.

4. Video editing systems: Efficient search and editing through additional force feedback effects based on semantic information such as scene breaks, etc.

5. Multimedia content (plus any content that can be listed in an ordered fashion) retrieval systems: Efficient navigation in data base query results.

6. Portable devices such as wristwatches, wearable computers, PDAs etc.

In the following the invention will be described in more detail by taking reference to the accompanying figures.

Fig. 1A-C     demonstrate different velocity dependencies of the absolute value f of the interaction feedback force which can be employed in the inventive method for operating a haptic interface unit.

Fig. 2         demonstrates a possible positional dependency of the absolute value f of the interaction feedback force which can be employed in the inventive method for operating a haptic interface unit.

Fig. 3         demonstrates the interdependencies of different operation modes of the inventive method for operating a haptic interface unit.

Fig. 4         schematically demonstrates a possible inventive haptic interface unit.

Fig. 5         is a schematical block diagram demonstrating further details of an embodiment of the inventive haptic interface unit.

Fig. 6         is a flowchart elucidating a preferred embodiment of the inventive method for operating a haptic interface unit.

In the sequence of Figs. 1A to 1C three different velocity dependencies for the absolute value f of the interaction feedback force IFF to be generated and exerted are shown. In each of the graphs of Figs. 1A to 1C the velocity v is indicated by the abscissa, whereas the ordinate shows the absolute value f of the interaction feedback force IFF. In each of the three cases of Figs.

1A to 1C the dependency between the minimum velocity $v_{min}$ and the maximum velocity $v_{max}$ demonstrates the inventive concept of inverted damping forces. Within this particular interval between $v_{min}$ and $v_{max}$ the respective absolute value f of the interaction feedback forces shows a monotonical decrease with increasing velocity v.

Outside the given interval $v_{min}$, $v_{max}$, i.e., for comparable small velocities v the absolute value f of the interaction feedback force IFF is set to a relative high value $f_{hold}$ or $f_{max}$, so as to exert a comparable large force or counterforce to be supplied to an user. This would lead to the impression that for relative small velocities below $v_{min}$ a finger or another limp is more or less fixed and hold in a fixed position.

For velocities outside the given velocity interval $v_{min}$, $v_{max}$, i.e., for velocities v larger than the maximum velocity $v_{max}$, the absolute value f of the interaction feedback force is set to a small value $v_{min}$,, for instance, it is set to zero. allowing a comparable free and undisturbed movement.

These explanations also hold with respect to the embodiments of Figs. 1B and 1C. The only difference is the velocity dependence within the interval $v_{min}$, $v_{max}$.

In the embodiment of Fig. 1A this dependency is realized by a step function or a staircase function with the levels of the different steps decreasing as the velocity raises from $v_{min}$ to $v_{max}$.

In Fig. 1B a linear dependence of the absolute value f is given between the boundaries of the interval $v_{min}$ to $v_{max}$.

In the embodiment of Fig. 1C the dependency of the absolute value f of the interaction feedback force IFF from the velocity v is given by a hyperbolic relationship in the sense of a proportionality to 1/v.

Fig. 2 demonstrates a positional dependency of the absolute value f of the interaction feedback force IFF for a given velocity v in the range between $v_{min}$ and $v_{max}$ of the embodiments according to Figs. 1A to 1C. The abscissa shows a one-dimensional positional coordinate, for instance in the sense of a distance d. The indicated values d1 to d5 indicate boundaries or item boundaries d1 to d5 between distinct items I1 to I4, for instance representative for bottoms or selection items on a graphical user interface. As a user moves, for instance a pointing unit or a pointing device over a spatial region, the interaction feedback force IFF and in particular its absolute value f is modulated according to the slope shown in Fig. 2. That means, that between the different items I1 to I4 the absolute value f increases as the pointer moves towards a given boundary d1 to d5 of the item I1 to I4. In contrast, in the interior of each of the items i1 to i4 the interaction feedback force IFF is comparable small. Consequently, the pointer can be freely moved in the interior of each of the items i1 to i4 and will be stopped or decelerated when moving towards the boundaries d1 to d5.

Fig. 3 demonstrates the interdependency of the different operation modes in an embodiment of the inventive method for operating a haptic interface unit. Here, three operation modes are demonstrated, the first of which being the inverted damping operation mode according to the present invention, the second one being the holding force mode or fingerhold mode as shown in Figs. 1A to 1C, and the preferred one being a force well mode as exemplified by Fig. 2. Starting with the inverted damping operation mode M1 of Fig. 3 the fingerhold mode M2 is entered, if the velocity v decreases below the damping threshold $v_{min}$. If the counterforce exerted by the user against the absolute value f of the interaction feedback force increases above the fingerhold threshold $f_{hold}$ or $f_{max}$ the force well mode M3 is entered which can be left if the velocity v again increases above the damping threshold $v_{min}$ so as to again enter the inverted damping operation mode M1.

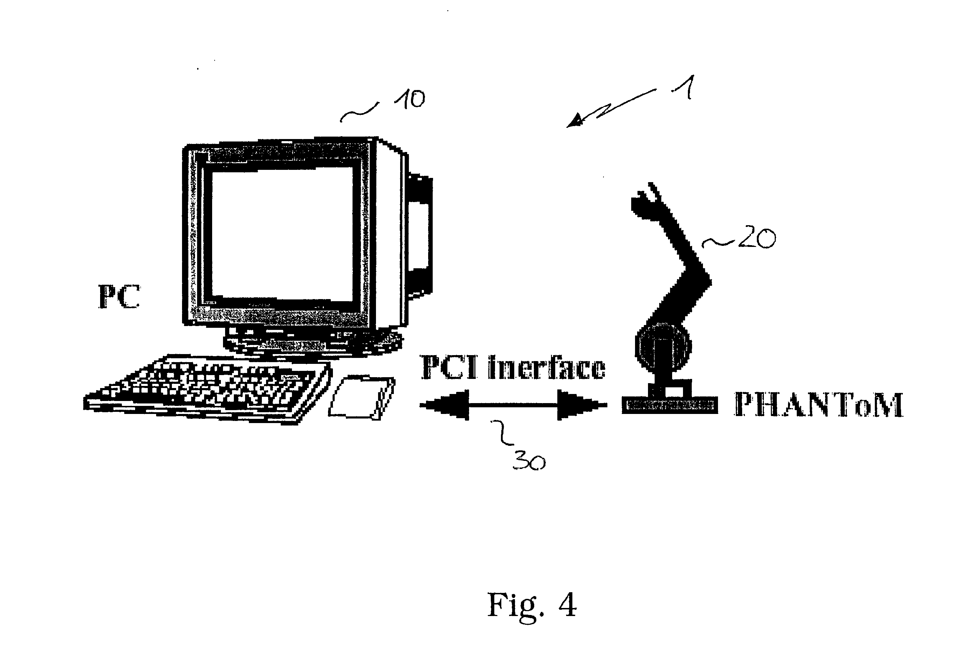

Fig. 4 is a schematical drawing of an embodiment of the inventive haptic interface unit 1. In the embodiment of Fig. 4 the inventive haptic interface unit 1 comprises a control unit 10 and a haptic device 20 in the form of a robot arm. Data exchange between the control unit 10 and the haptic device 20 is performed by a PCI interface 30.

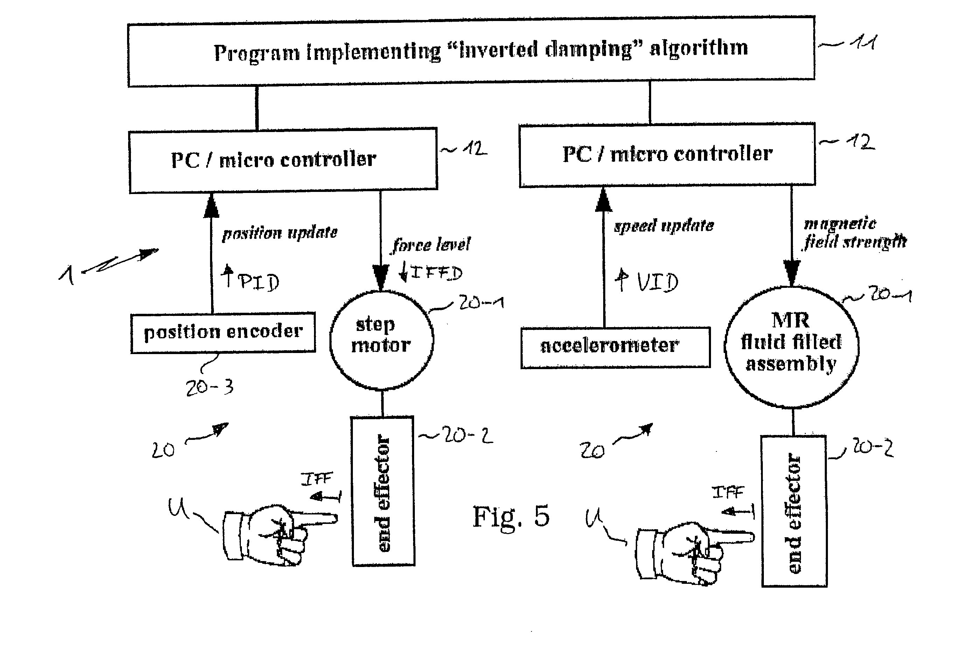

Fig. 5 demonstrates by means of a schematical block diagram more details of an embodiment of the inventive haptic interface unit 1. Again, the haptic interface unit 1 is constituted by a control unit 10 and a haptic device 20. The control unit 10 comprises a section 11 for a program, which implements an inverted damping algorithm. Based upon the processing data evaluation of section 11 micro controller 12 are controlled to initiate haptic devices 20 to generate and to exert respective interaction feedback forces IFF, in particular based on respective interaction feedback force data IFFD, the respective interaction feedback force IFF acting on a given user U by interacting with an end effector 20-2. Besides the end effectors 20-2 the respective haptic devices 20 are also constituted by force generation means 20-1. Said force generation means 20-1 may be a step motor as shown on the left-hand side of Fig. 5, or a magnetic resistance fluid-filled assembly as shown on the right-hand side of the assembly of Fig. 5. For controlling the forces IFF to be generated by appropriately adapting the interaction feedback force data IFFD position information data PID and/or velocity information data VID for a position update and a speed update, respectively, are obtained from sensing means 20-3. Said sensing means 20-3 may be a position encoder as shown on the left-hand side of the embodiment of Fig. 5, or an accelerometer as shown on the right-hand side of the embodiment of Fig. 5.

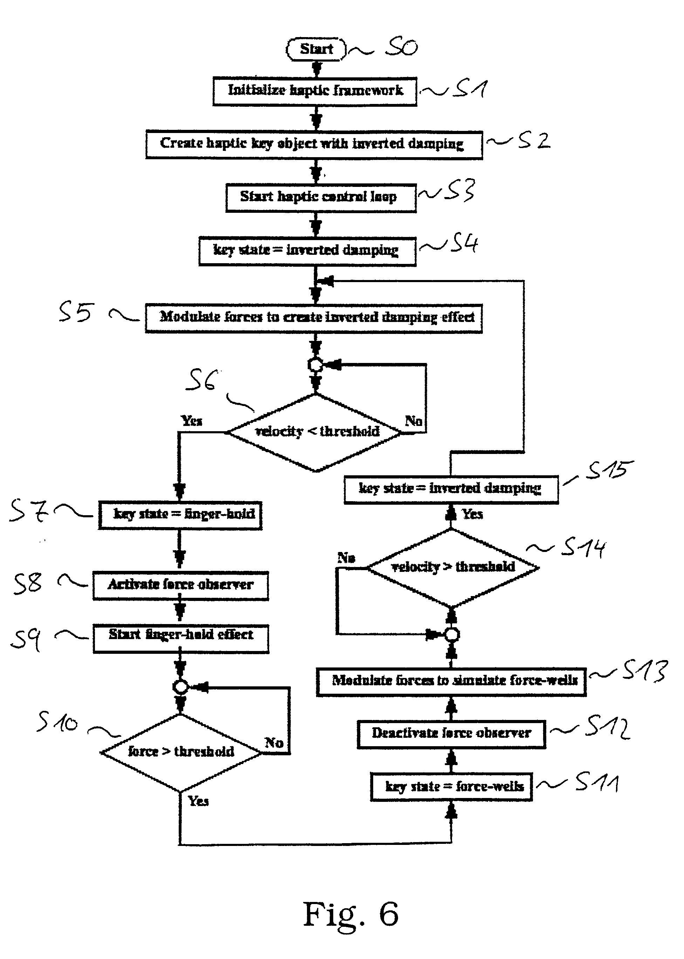

Fig. 6 demonstrates a preferred embodiment of the inventive method for operating a haptic interface unit by means of a flowchart.

After a starting step S0 a haptic framework of the inventive haptic interface unit 1 is initialized in step S1. Haptic key objects with inverted damping are created in the following step S2. Then, a haptic control loop S3 is started. The key state is set to the inverted damping mode in step S4. In step S5 forces to create inverted damping effects are modulated. In the following step S6 it is checked on whether or not the velocity v is lower than a given threshold. If this is the case the procedure proceeds with the following step S7 and sets the key state to the fingerhold operation mode; otherwise, step S6 of checking the velocity v is repeated. In step S8 a force observer or sensing means is activated. Then, in step S9 the fingerhold or holding force effect is starting. In the following step S10 it is checked on whether or not the counterforce exerted by the user is above a given threshold. If this is the case the key state is set to the force well operation mode in step S11; otherwise, step S10 for checking the counterforce exerted by the user is repeated. In step S12 the force sensing means or force observer is deactivated. Then, in the following step S13 the forces are modulated so as to realize a force well structure. In the following step S14 it is checked on whether or not the velocity increases above a given threshold. Is this the case, the key state is set to the inverted damping operation mode in step S15 and then branched back to step S5 to close the loop

**Reference Symbols**

| | |
|---|---|
| **1** | haptic interface unit |
| **10** | control unit |
| **11** | program section |
| **12** | micro controller |
| **20** | haptic device |
| **20-1** | force generation means |
| **20-2** | end effector |
| **20-3** | sensing means |
| **30** | interface |

| | |
|---|---|
| **d** | distance, position |
| **d1-d5** | item boundary |
| $f_{hold}$ | holding force |
| $f_{min}$ | minimum force |
| $f_{max}$ | maximum force |
| **IFF** | interaction feedback force |
| **IFFD** | interaction feedback force data |
| **PID** | position information data |
| **v** | velocity |
| $v_{min}$ | minimum velocity, finger hold threshold |
| $v_{max}$ | maximum velocity, no-force threshold |
| **VID** | velocity information data |
| **x** | position |

**Claims**

**1.** Method for operating a haptic interface unit,

- wherein at least velocity information data (VID) with respect to at least one haptic device (20) are generated and/or received,
- wherein based on and in dependence of at least said velocity information data (VID) interaction feedback force data (IFFD) are generated and/or provided being descriptive or representative for an interaction feedback force (IFF) to be generated and/or to be exerted by said at least one haptic device (20), and
- wherein said interaction feedback force data (IFFD) are transmitted to said at least one haptic device (20) so as to generate and/or exert said interaction feedback force (IFF),

**characterized in that**
an inverted damping operation mode is provided:

- wherein said interaction feedback force data (IFFD) are at least partly generated to be representative for an interaction feedback force (IFF) which increases with velocity information data (VID) being representative for a decreasing velocity (v), so as to generate and/or exert an interaction feedback force (IFF) which increases with a decreasing velocity (v) and/or
- wherein said interaction feedback force data (IFFD) are at least partly generated to be representative for an interaction feedback force (IFF) which decreases with velocity information data (VID) being representative for an increasing velocity (v), so as to generate and/or exert an interaction feedback force (IFF), which decreases with an increasing velocity (v),
- said velocity (v) being a velocity (v) with respect to a respective haptic device (20) or a pointing unit thereof.

2. Method according to claim 1,
wherein said inverted damping operation mode is performed with respect to vectorial components of said interaction feedback force (IFF) and/or said velocity (v), in particular in an independent manner.

3. Method according to any one of the preceding claims,
wherein said interaction feedback force data (IFFD) are generated to describe said interaction feedback force (IFF) as a damping force, so as to generate and/or exert an interaction feedback force (IFF) acting against a given velocity (v) or a vectorial component thereof, in particular in the sense of a counterforce or frictional force.

4. Method according to any one of the preceding claims,
wherein the interaction feedback force data (IFFD) are generated to describe said interaction feedback force (IFF) or a vectorial component thereof as having an absolute value f being - at least piecewise - a positive monotonically decreasing function g of the respective velocity (v) or of a vectorial component thereof to fulfill the relation

$$f(v) \propto g(v).$$

5. Method according to claim 4,
wherein said at least piecewise positive and monotonically decreasing function g is chosen to fulfill at least piecewise the relation

$$g(v) = \frac{1}{h(v)},$$

where h is at least piecewise a positive and monotonically increasing function of the velocity v or of a vectorial component thereof.

6. Method according to any one of the claims 4 or 5,
wherein said at least piecewise positive and monotonically decreasing function g is chosen to fulfill at least piecewise the relation

$$g(v) = \frac{1}{|v|},$$

where v denotes a velocity or vectorial component thereof.

7. Method according to any one of the preceding claims 4 to 6,
wherein said at least piecewise positive and monotonically decreasing function g is chosen to be at least piecewise a step function, a staircase function and/or a linear function.

8. Method according to any one of the preceding claims,
wherein said interaction feedback force data (IFFD) are generated to describe said interaction feedback force (IFF) as a force which is at least piecewise dependent on a position (x) or a position vector ($\vec{r}$).

9. Method according to claim 8,
wherein said position (x) or position vector ($\vec{r}$) are chosen to describe or to be assigned to a position of a respective haptic device (20) or an element, in particular said pointing unit thereof.

10. Method according to any one of the preceding claims 8 or 9,
wherein said position (x) or position vector ($\vec{r}$) is chosen to describe or to be assigned to a position of a corresponding abstract pointing means within a data structure, in particular of a graphical user interface (GUI).

**11.** Method according to any one of the preceding claims, wherein a holding force mode is provided in which the absolute value (f) of the interaction feedback force (IFF) or a vectorial component thereof is increased - in particular in a position dependent form - to a predetermined value ($f_{hold}$) or above a predetermined force level ($f_{max}$), if the respective velocity (v) or a vectorial component thereof decreases below a given threshold value ($v_{min}$).

**12.** Method according to any one of the preceding claims, wherein the absolute value (f) of the interaction feedback force (IFF) or a vectorial component thereof is decreased to a predetermined value ($f_{min}$), in particular of zero, or below a predetermined force level ($f_{min}$), if the respective velocity (v) or a vectorial component thereof increases above a given threshold value ($v_{max}$).

**13.** Haptic interface unit, which is capable of performing or realizing a operating method according to any one of the claims 1 to 12 and/or the steps thereof.

**14.** Computer program product, comprising computer program means being adapted to perform and/or realize the method for operating a haptic interface unit according to any one of the claims 1 to 12 and/or the steps thereof, when it is executed on a computer, a digital signal processing means and/or the like.

**15.** Computer readable storage medium, comprising a computer program product according to claim 14.

Fig. 1

EP 1 416 359 A1

Fig. 2

EP 1 416 359 A1

Fig. 3

EP 1 416 359 A1

Fig. 4

PC

PCI inerface

PHANToM

10

1

20

30

EP 1 416 359 A1

Program implementing "inverted damping" algorithm ~ 11

PC / micro controller ~ 12

PC / micro controller ~ 12

position update

speed update

force level

magnetic field strength

↑ PID

↓ IFFD

↑ VID

position encoder

step motor ~ 20-1

accelerometer

MR fluid filled assembly ~ 20-1

20-3

20

20

end effector ~ 20-2

IFF

end effector ~ 20-2

IFF

Fig. 5

Start ~ S0

Initialize haptic framework ~ S1

Create haptic key object with inverted damping ~ S2

Start haptic control loop ~ S3

key state = inverted damping ~ S4

S5 ~ Modulate forces to create inverted damping effect

S6 ~ velocity < threshold
- Yes
- No

S7 ~ key state = finger-hold

S8 ~ Activate force observer

S9 ~ Start finger-hold effect

S10 ~ force > threshold
- No
- Yes

key state = inverted damping ~ S15

velocity > threshold ~ S14
- No
- Yes

Modulate forces to simulate force-wells ~ S13

Deactivate force observer ~ S12

key state = force-wells ~ S11

Fig. 6

EP 1 416 359 A1

## European Patent Office

# EUROPEAN SEARCH REPORT

**Application Number**

EP 02 02 4276

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2002/109668 A1 (RAMSTEIN CHRISTOPHE ET AL) 15 August 2002 (2002-08-15) * claim 1; figures 5A-6B * | 1-15 | G06F3/00 |
| A | US 2002/054021 A1 (ROSENBERG LOUIS B ET AL) 9 May 2002 (2002-05-09) * claim 1; figure 6 * | 1-15 | |
| A | US 5 825 308 A (ROSENBERG LOUIS B) 20 October 1998 (1998-10-20) * claim 1; figure 12 * | 1-15 | |
| A | US 6 448 977 B1 (ROSENBERG LOUIS B ET AL) 10 September 2002 (2002-09-10) * claim 1; figure 5 * | 1-15 | |

TECHNICAL FIELDS SEARCHED (Int.Cl.7)

G06F

The present search report has been drawn up for all claims

| Place of search | Date of completion of the search | Examiner |
|---|---|---|
| BERLIN | 6 March 2003 | Kirsten, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

15

**EP 1 416 359 A1**

## ANNEX TO THE EUROPEAN SEARCH REPORT
## ON EUROPEAN PATENT APPLICATION NO.

EP 02 02 4276

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2003

| Patent document cited in search report | | Publication date | Patent family member(s) | | Publication date |
|---|---|---|---|---|---|
| US 2002109668 | A1 | 15-08-2002 | US | 2001002126 A1 | 31-05-2001 |
| | | | US | 6219032 B1 | 17-04-2001 |
| | | | US | 2001040553 A1 | 15-11-2001 |
| | | | US | 6259382 B1 | 10-07-2001 |
| | | | US | 6232891 B1 | 15-05-2001 |
| | | | US | 5825308 A | 20-10-1998 |
| | | | US | 6317116 B1 | 13-11-2001 |
| | | | US | 6078308 A | 20-06-2000 |
| | | | CA | 2239125 A1 | 12-06-1997 |
| | | | EP | 0864144 A2 | 16-09-1998 |
| | | | WO | 9721160 A2 | 12-06-1997 |
| | | | US | 2002138562 A1 | 26-09-2002 |
| | | | US | 6101530 A | 08-08-2000 |
| | | | US | 6161126 A | 12-12-2000 |
| | | | US | 6366272 B1 | 02-04-2002 |
| | | | US | 6353850 B1 | 05-03-2002 |
| | | | US | 6028593 A | 22-02-2000 |
| | | | US | 5956484 A | 21-09-1999 |
| | | | US | 2002021283 A1 | 21-02-2002 |
| | | | US | 2002050978 A1 | 02-05-2002 |
| | | | AU | 5510698 A | 22-06-1998 |
| | | | AU | 734986 B2 | 28-06-2001 |
| | | | AU | 7850398 A | 03-07-1998 |
| | | | EP | 0943179 A1 | 22-09-1999 |
| | | | EP | 0941578 A1 | 15-09-1999 |
| | | | JP | 2000515285 T | 14-11-2000 |
| | | | WO | 9826342 A2 | 18-06-1998 |
| | | | WO | 9824183 A1 | 04-06-1998 |
| | | | US | 6154201 A | 28-11-2000 |
| | | | US | 6191774 B1 | 20-02-2001 |
| | | | US | 2002030664 A1 | 14-03-2002 |
| | | | US | 2001026266 A1 | 04-10-2001 |
| | | | US | 6100874 A | 08-08-2000 |
| | | | US | 6166723 A | 26-12-2000 |
| | | | EP | 0995186 A2 | 26-04-2000 |
| | | | WO | 9858323 A2 | 23-12-1998 |
| | | | WO | 02057885 A2 | 25-07-2002 |
| US 2002054021 | A1 | 09-05-2002 | US | 6169540 B1 | 02-01-2001 |
| | | | US | 5734373 A | 31-03-1998 |
| | | | US | 6147674 A | 14-11-2000 |
| | | | US | 2002163498 A1 | 07-11-2002 |
| | | | EP | 0995152 A1 | 26-04-2000 |
| | | | WO | 9858308 A1 | 23-12-1998 |
| | | | US | 6285351 B1 | 04-09-2001 |
| | | | US | 6292170 B1 | 18-09-2001 |

EPO FORM P0459

For more details about this annex : see Official Journal of the European Patent Office, No. 12/82

16

## ANNEX TO THE EUROPEAN SEARCH REPORT
## ON EUROPEAN PATENT APPLICATION NO.

EP 02 02 4276

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2003

| Patent document cited in search report | | Publication date | Patent family member(s) | | Publication date |
|---|---|---|---|---|---|
| US 2002054021 | A1 | | CA | 2233136 A1 | 03-04-1997 |
| | | | CA | 2239125 A1 | 12-06-1997 |
| | | | EP | 0852789 A1 | 15-07-1998 |
| | | | EP | 0864144 A2 | 16-09-1998 |
| | | | WO | 9721160 A2 | 12-06-1997 |
| | | | JP | 11514469 T | 07-12-1999 |
| | | | US | 6271833 B1 | 07-08-2001 |
| | | | US | 6219033 B1 | 17-04-2001 |
| | | | US | 2002126091 A1 | 12-09-2002 |
| | | | WO | 9712357 A1 | 03-04-1997 |
| | | | US | 6348911 B1 | 19-02-2002 |
| | | | US | 6278439 B1 | 21-08-2001 |
| | | | US | 6366272 B1 | 02-04-2002 |
| | | | US | 6219032 B1 | 17-04-2001 |
| | | | US | 5691898 A | 25-11-1997 |
| | | | US | 6028593 A | 22-02-2000 |
| | | | US | 5959613 A | 28-09-1999 |
| | | | US | 2001002126 A1 | 31-05-2001 |
| | | | US | 2001030658 A1 | 18-10-2001 |
| | | | US | 5907487 A | 25-05-1999 |
| | | | US | 5929607 A | 27-07-1999 |
| | | | US | 2002021283 A1 | 21-02-2002 |
| | | | EP | 1012697 A1 | 28-06-2000 |
| | | | WO | 9849614 A1 | 05-11-1998 |
| US 5825308 | A | 20-10-1998 | AU | 5510698 A | 22-06-1998 |
| | | | AU | 734986 B2 | 28-06-2001 |
| | | | AU | 7850398 A | 03-07-1998 |
| | | | EP | 0943179 A1 | 22-09-1999 |
| | | | EP | 0941578 A1 | 15-09-1999 |
| | | | JP | 2000515285 T | 14-11-2000 |
| | | | US | 2002109668 A1 | 15-08-2002 |
| | | | WO | 9826342 A2 | 18-06-1998 |
| | | | WO | 9824183 A1 | 04-06-1998 |
| | | | US | 6232891 B1 | 15-05-2001 |
| | | | US | 6154201 A | 28-11-2000 |
| | | | US | 6191774 B1 | 20-02-2001 |
| | | | US | 6259382 B1 | 10-07-2001 |
| | | | US | 6317116 B1 | 13-11-2001 |
| | | | US | 2002030664 A1 | 14-03-2002 |
| | | | US | 2001026266 A1 | 04-10-2001 |
| | | | US | 6078308 A | 20-06-2000 |
| | | | US | 6100874 A | 08-08-2000 |
| | | | US | 2001040553 A1 | 15-11-2001 |
| | | | US | 6166723 A | 26-12-2000 |
| | | | US | 2002050978 A1 | 02-05-2002 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 02 02 4276

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2003

| Patent document cited in search report | | Publication date | Patent family member(s) | | Publication date |
|---|---|---|---|---|---|
| US 6448977 | B1 | 10-09-2002 | US | 6211861 B1 | 03-04-2001 |
| | | | US | 6243078 B1 | 05-06-2001 |
| | | | US | 6088019 A | 11-07-2000 |
| | | | US | 6300936 B1 | 09-10-2001 |
| | | | AU | 1957501 A | 18-06-2001 |
| | | | DE | 20080275 U1 | 28-03-2002 |
| | | | WO | 0143114 A1 | 14-06-2001 |
| | | | US | 2001026264 A1 | 04-10-2001 |
| | | | US | 2001010513 A1 | 02-08-2001 |
| | | | AU | 4707499 A | 10-01-2000 |
| | | | CA | 2300899 A1 | 29-12-1999 |
| | | | DE | 29922298 U1 | 02-03-2000 |
| | | | DE | 29923332 U1 | 07-12-2000 |
| | | | EP | 1005690 A1 | 07-06-2000 |
| | | | GB | 2343499 A ,B | 10-05-2000 |
| | | | GB | 2346952 A | 23-08-2000 |
| | | | WO | 9966997 A1 | 29-12-1999 |
| | | | US | 2003030619 A1 | 13-02-2003 |
| | | | US | 2001035854 A1 | 01-11-2001 |
| | | | US | 2002054011 A1 | 09-05-2002 |
| | | | US | 2001019324 A1 | 06-09-2001 |
| | | | US | 2002097223 A1 | 25-07-2002 |
| | | | US | 6353427 B1 | 05-03-2002 |
| | | | AU | 1391199 A | 07-06-1999 |
| | | | EP | 1036390 A1 | 20-09-2000 |
| | | | GB | 2348352 A ,B | 27-09-2000 |
| | | | US | 2002095224 A1 | 18-07-2002 |
| | | | US | 2002138562 A1 | 26-09-2002 |
| | | | WO | 9926230 A1 | 27-05-1999 |
| | | | US | 6161126 A | 12-12-2000 |
| | | | US | 6252583 B1 | 26-06-2001 |
| | | | US | 6125385 A | 26-09-2000 |
| | | | US | 6343349 B1 | 29-01-2002 |
| | | | US | 6353850 B1 | 05-03-2002 |

EPO FORM P0459

For more details about this annex : see Official Journal of the European Patent Office, No. 12/82